# EUROPEAN PATENT APPLICATION

(11) **EP 3 666 495 A1**
(43) Date of publication of application: **17.06.2020**
(21) Application number: 19213653.9
(22) Date of filing: 04.12.2019
(51) Int. Cl.: B29C 48/25, B29C 48/69, B29C 48/76

(54) **EXTRUSION DIE**

(30) Priority: 11.12.2018 IT 201800010977
(71) Applicant: Macchine Speciali S.r.l., 20863 Concorezzo MB (IT)
(72) Inventor: SIRONI, Giovanni, 23875 Osnago LC (IT)
(74) Representative: Concone, Emanuele

(57) **Abstract**

Extrusion die comprising at least one filter (3) arranged between at least two modules (1) joined together to form at least one channel (11) for the material to be extruded, wherein at least one module (1) comprises one or more ducts (18) which connect the channel (11) with at least one external surface of the module (1) through the filter (3), so that fluids can be sucked from the channel (11) or introduced into the channel (11) through the filter (3).

## Description

### TECHNICAL FIELD

The present description relates to an extrusion die, in particular a die that can be used for the extrusion of polytetrafluoroethylene (PTFE) paste.

### FRAMEWORK OF THE DESCRIPTION

Known dies for extruding PTFE comprise at least two modules that have a substantially half-cylinder shape and are joined together with screws perpendicular to the longitudinal axis of the resulting cylinder to form a channel for the material to be extruded between them. This construction is made necessary by the impossibility of working the complex geometry of the channel starting from a single block. The channel in fact has a relatively complex internal geometry, which serves to compress and expand the PTFE before passing through the profiling head, so that the PTFE comes out with a consistency suitable for extrusion. However, despite the particular geometry of the channel, the consistency of the extruded material may not be completely homogeneous or have exactly the required characteristics.

US 2262989 discloses an extrusion die according to the preamble of claim 1.

### SUMMARY OF DESCRIPTION

The purpose of the present description is therefore to provide an extrusion die without these drawbacks. This object is achieved with an extrusion die, the main features of which are specified in the appended claims.

Thanks to the particular connection with the outside, the extrusion die according to the present description allows to suck or introduce fluids into the channel, so as to improve the physical and/or chemical characteristics of the material to be extruded that passes in the channel.

In particular, the gaseous content in the PTFE paste is substantially reduced if gas is aspirated from the channel, especially if this suction occurs between an expansion portion and a compression portion of the channel.

Thanks to the particular modular structure of the extrusion die, two or more modules with channels having different shapes and/or sizes can be combined, oriented and arranged in series with each other in order to easily vary the process for treating the material in the channels, so as to optimize the physical and/or chemical characteristics of the material to be extruded. With this arrangement, an extrusion die having a channel with an even more complex form with respect to the channels of the known dies can be obtained simply and quickly.

Preferably, the modules comprise at least one channel and are aligned with each other, so that each module can be made in a single piece with an "hourglass" channel which is able to treat the material to be extruded optimally, especially if the central portion of the channel it has a section with a substantially bilobed or elliptical shape.

The modules may comprise particular axial holes and/or coupling means, so that two adjacent modules can be joined together in an easy, fast and resistant way.

The extrusion die may comprise a particular filter which allows a good passage of gas without the filter itself and/or the modules being clogged by the PTFE paste. In any case, the filter can be easily replaced with a similar filter, preferably adapted to the characteristics of the material to be extruded, and can also be used in the known dies.

The extrusion die can comprise particular ducts and/or a particular manifold to simplify and improve fluid flow between the filter and the fluid suction or compression means.

### BRIEF DESCRIPTION OF THE DRAWINGS

Further advantages and characteristics of the extrusion die according to the present description will be apparent to those skilled in the art from the following detailed and non-limiting description of an embodiment thereof with reference to the attached drawings in which:
- figure 1 shows a side view of the die;
- figure 2 shows a view from above of the die of figure 1;
- figure 3 shows a view from below of the die of figure 1;
- figure 4 shows a first exploded view of the die of figure 1;
- figure 5 shows a second exploded view of the die of figure 1;
- figure 6 shows the section VI-VI of figure 2;
- figure 7 shows the section VII-VII of figure 6;
- figure 8 shows the section VIII-VIII of figure 6;
- figure 9 shows the section IX-IX of figure 6;
- figure 10 shows the section X-X of figure 6;
- figure 11 shows the section XI-XI of figure 6;
- figure 12 shows an enlarged view of the filter for the die of figure 1; and
- figure 13 shows the detail XIII of figure 12, in section.

### EXEMPLARY EMBODIMENTS

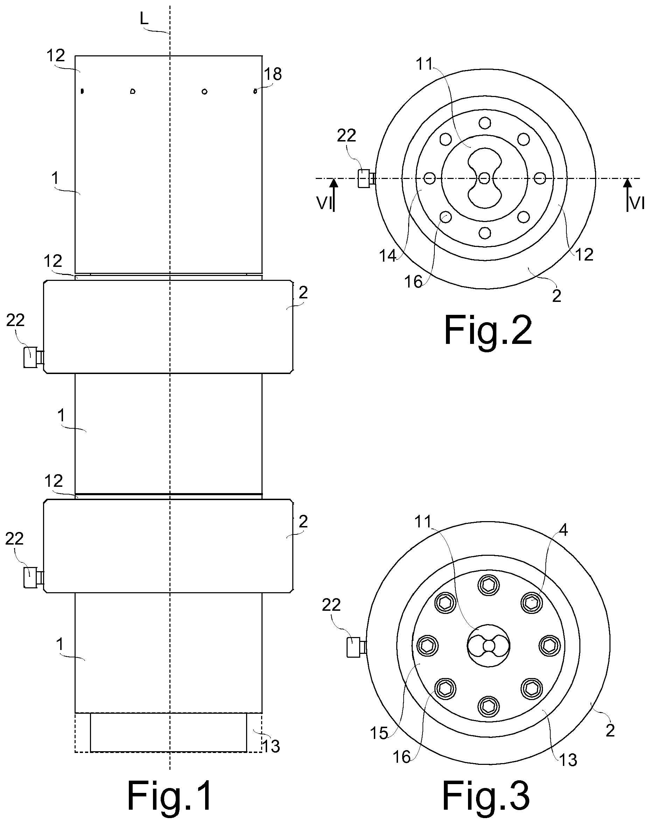

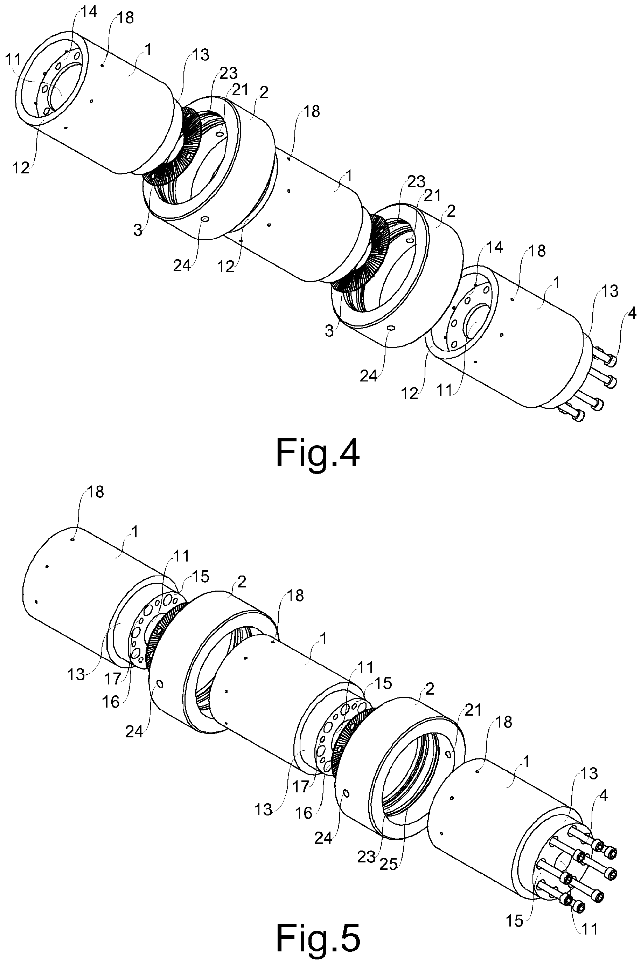

With reference to figures 1 to 11, it can be seen that the extrusion die according to the present description comprises at least two modules 1, in particular three modules 1, which can be joined together to form at least one channel for the material to be extruded. In particular the modules 1 are arranged in series and joined together one after the other. The die can be arranged between a press and a profiling head, both not shown in the figures, in particular for the extrusion of PTFE paste.

The modules 1 comprise a channel 11 having a substantially tubular shape which extends along a longitudinal axis L, preferably with a section having a profile which varies gradually along the longitudinal axis L, i.e. without steps in the channel 11, so as to facilitate the flow of the material to be extruded during the extrusion operation. The ends of the channel 11 of a module 1 comprise respectively an inlet mouth 11a and an outlet mouth 11b in which the material to be extruded can respectively enter and exit. Preferably, the inlet mouth 11a and/or the outlet mouth 11b have a substantially elliptical profile, in particular circular, and have a substantially constant section along an initial and/or final section of the channel 11.

The area of the section of the inlet mouth 11a can be the same of (as in the second module 1 shown in the figures) or greater than (as in the first and third module 1 shown in the figures) the area of the section of the outlet mouth 11b. The profile of the outlet mouth 1 1b of the first or second module 1 is substantially the same as the profile of the inlet mouth 11a of the second or third module 1, respectively, so that the final section of the channel 11 of a module 1 can be aligned with the initial section of channel 11 of the adjacent module 1, if present.

The channel 11 further comprises, between the inlet mouth 1 1a and the outlet mouth 11b, in sequence, a compression portion 11c, a central portion 11d and an expansion portion 11e connected to each other. The inlet mouth 11a, the outlet mouth 11b, the compression portion 11c, the central portion 11d and/or the expansion portion 11e are substantially coaxial, in particular substantially aligned with the longitudinal axis L of the module 1. The area of the section of the central portion 11d is preferably smaller than the area of the inlet mouth 11a and of the area of the outlet mouth 11b, so that the channel 11, on the whole, has a substantially hourglass shape which develops along the longitudinal axis L, i.e. a shape comprising a constriction at the central portion 11d.

The succession of several modules 1 joined together allows the succession of several channels 11 aligned with each other, so that the material to be extruded is subjected to a series of compressions and expansions in the modules 1.

Preferably, the central portion 11d of the channel 11 has a substantially constant section along a central section of the channel 11 and/or a substantially bilobed profile, as in the first and third module 1, or substantially elliptical, in particular circular, as in the second module 1. The compression portion 11c of the channel 11 connects the profile of the inlet mouth 11a of the channel 11 to the profile of the central section 11d of the channel 11, so as to compress the material to be extruded. The expansion section 11e of the channel 11 connects the profile of the central section 11d of the channel 11 to the outlet mouth 11b of the channel 11, so as to expand the material to be extruded.

Preferably, two modules 1, in particular the first module 1 and the third module 1, are arranged so that the major axes MA of the bilobed profile of the central section 11d of their channels 11 are substantially perpendicular to each other.

Preferably, each module 1 has a substantially cylindrical shape and/or comprises at least one rib 12, for example of a substantially cylindrical shape, which projects outwardly in the direction of the longitudinal axis L and is adapted to be coupled with another module 1 or with another device, such as an extruder press. Each module 1 may comprise at least one seat 13, in particular a substantially cylindrical groove, adapted to be coupled with the rib 12 of another module 1 or with another device, for example the head of an extruder. The two bases of the module 1 may respectively comprise an inlet face 14, surrounded by the rib 12 and/or comprising the inlet mouth 11a, and an outlet face 15, surrounded by the seat 13 and/or comprising the outlet mouth 11b. The inlet face 14 and/or the outlet face 15 have a substantially elliptical shape, in particular circular.

Each module 1 may further comprise first axial holes 16 and/or second axial holes 17. Preferably, the first axial holes 16 are through holes, i.e. they lead to the inlet face 14 and to the outlet face 15, while the second axial holes 17 they are threaded and blind, i.e. they lead only to one of the two faces, in particular to the outlet face 15. The first axial holes 16 and/or the second axial holes 17 are substantially parallel to each other and/or to the longitudinal axis L and are arranged substantially at the same distance from the longitudinal axis L, forming angles of 360°/h1 and/or 360°/h2 between them, where h1 is the number of the first axial holes 16 and h2 is the number of the second axial holes 17. In the present embodiment the modules 1 comprise eight first axial holes 16 and/or eight second axial holes 17, i.e. h1=8 and h2=8, and are alternated with each other, i.e. a first axial hole 16 is disposed between two second axial holes 17, forming angles of about 360°/(8 + 8), i.e. about 22,5°. The third module 1 may not comprise second axial holes 17.

The modules 1 are aligned and oriented to each other so that the first axial holes 16 of a module 1 are aligned with the second axial holes 17 of at least one adjacent module 1. Screws 4 can then be inserted in the first axial holes 16 from the outlet face 15 of a module 1, pass through the inlet face 14 of the same module 1 and screwed into the second axial holes 17 of the adjacent module 1 to join these two modules 1 together. For this purpose, the first axial holes 16 comprise a neck 16a acting as a stop for the head of the screws 4.

At least one filter 3 is preferably arranged between two adjacent modules 1 or between a module 1 and another device connected to it. In particular, the filter 3 is arranged between the outlet face 15 of a module 1, for example the first or second module 1, and the inlet face 14 of an adjacent module 1, for example the second or third module 1. The seat 13 of a module 1 is preferably higher than the rib 12 of the adjacent module 1 or even of the same module 1, so that the filter 3 is pressed by the screws 4 against the inlet face 14 and the outlet face 15 of two adjacent modules 1, in particular also surrounded by the rib 12.

Therefore, at least one channel 11 of a module 1 is connected with the outside of the modules 1 through at least one filter 3, so that fluids can be sucked from the channel 11 or introduced into the channel 11 through the filter 3.

At least one module 1 may comprise one or more ducts 18 to connect the filter 3 with at least one external surface of the module 1. The ducts 18 are substantially perpendicular to the longitudinal axis L, in particular arranged around the filter 3, so as to pass through the rib 12, if present. The ducts 1 can be uniformly distributed around the modules 1 and are in particular eight, so as to form angles between them of about 360°/8, i.e. about 45°.

The modules 1 are preferably made in a single piece of metallic material in which the channel 11, the first axial holes 16, the second axial holes 17 and/or the ducts 18 are obtained by removing material, for example by means of CNC drill and/or milling machine.

A manifold 2 is preferably arranged outside at least one module 1 for connecting the filter 3, in particular through the ducts 18, to fluid suction/compression means, in particular to a vacuum pump (not shown in the figures). The manifold 2 has an annular shape, in which the inner surface has a substantially cylindrical shape and/or comprises at least one groove 23 adapted to be arranged around the filter 3, in particular the ducts 18, and connected to at least one fitting 24 preferably provided of a threaded hole for said fluid suction/compression means. The groove 23 is preferably arranged between two further grooves in which a gasket 25 is arranged which ensures the sealing of fluids between the manifold 2 and the module 1. The manifold 2 also comprises fixing means for removably fixing the manifold 2 to the module 1, in particular a threaded through hole 21, not coinciding with the groove 23, into which a screw 22 is screwed, whose stem can press on the outer wall of the module 1 during its screwing.

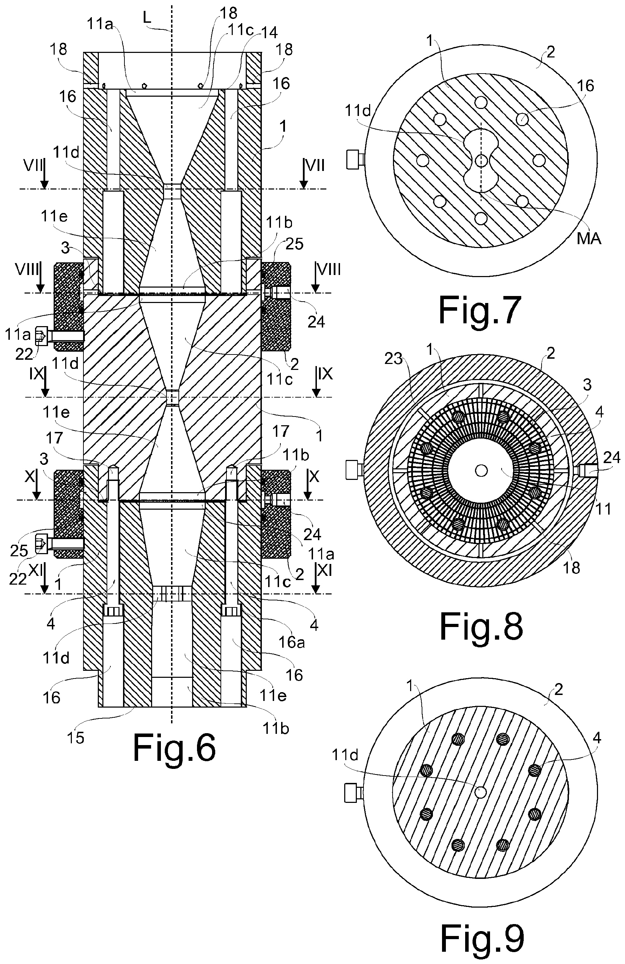

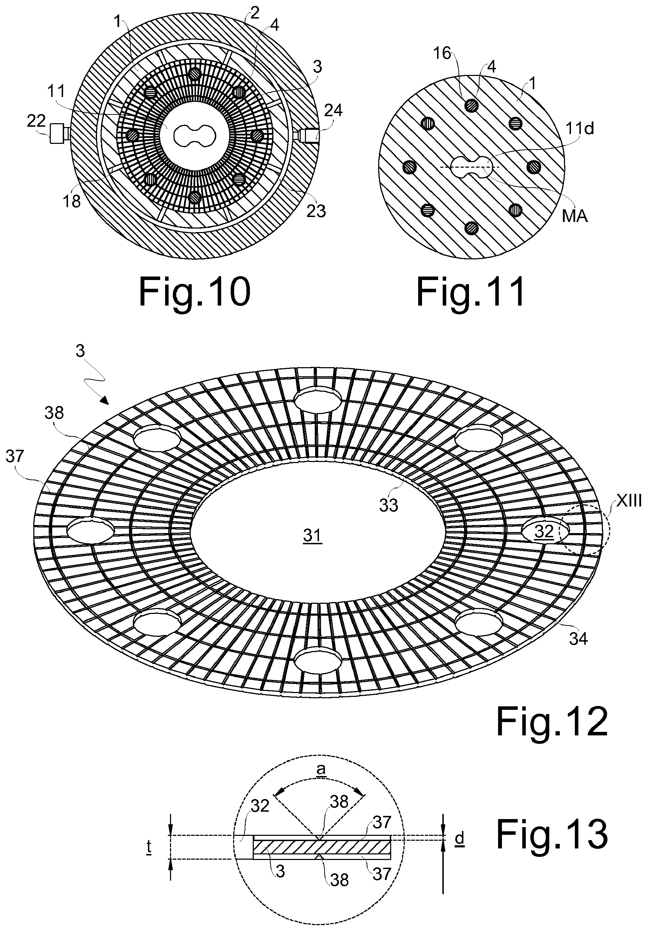

With reference to figure 12, it can be seen that the filter 3 preferably comprises a plate which may have a substantially elliptical, in particular circular shape. The filter 3 may comprise a central opening 31 for the passage of the material to be extruded between the channels 11 of two adjacent modules 1 and/or a plurality of through holes 32 for the passage of the screws 4 which join these two modules 1 together. The filter therefore comprises an inner edge 33, an outer edge 34, an inlet face 35 and an outlet face 36. The faces 35 and/or 36 of the filter 3 are substantially the same and/or comprise radial grooves 37 which connect the inner edge 33 to the outer edge 34. The faces 35 and/or 36 of the filter 3 may comprise one or more annular grooves 38, preferably concentric, which connect two or more radial grooves 37 between them, so that the radial grooves 37 and the annular grooves 38 of the faces 35 and/or 36 form a network of grooves. When a pair of modules 1 is mutually coupled comprising the filter 3 between them, as is clearly visible in figures 8 and 10, a passage of fluids occurs between the channels 11 and the ducts 18 of the modules 1 through the radial grooves 37 or also the annular grooves 38, delimited by the inlet face 14 of a module 1 and by the outlet face 15 of the adjacent module 1.

With reference to figure 13, it can be seen that the radial grooves 37 and/or the annular grooves 38 have a depth d equal to 10-30% of the thickness t of the filter 3, equal to 0,5-1,5 mm, in particular about 1 mm, and/or a substantially constant and triangular section, in particular a section substantially in the form of an isosceles triangle having an angle at the vertex of 80°-100°, in particular about 90°, facing the filter 3. The radials grooves 37 are preferably equidistant and/or placed at intervals of 3-5°, in particular about 4°. The annular grooves 38, on the other hand, are for example from 3 to 5, in particular 4, and/or arranged at distances of 10-20 mm from one another. The filter 3 has a diameter of 80-120 mm, in particular about 100 mm, and the central opening 31 has a diameter of 40-50 mm, in particular about 45 mm.

Possible variations or additions can be made by those skilled in the art to the embodiment described and illustrated herein, remaining within the scope of the following claims. In particular, further embodiments may comprise the technical characteristics of one of the following claims with the addition of one or more technical features described in the text or illustrated in the drawings, taken individually or in any combination thereof.

## Claims

1. Extrusion die comprising at least one filter (3) arranged between at least two modules (1) joined together to form at least one channel (11) for the material to be extruded, **characterized in that** at least one module (1) comprises one or more ducts (18) which connect the channel (11) with at least one external surface of the module (1) through the filter (3), so that fluids can be sucked from the channel (11) or introduced into the channel (11) through the filter (3).

2. Extrusion die according to the previous claim, **characterized in that** the modules (1) comprise at least one channel (11) and are arranged in series one after the other, so as to connect the respective channels (11) to each other.

3. Extrusion die according to one of the preceding claims, **characterized in that** the ducts (18) are arranged around the filter (3).

4. Extrusion die according to one of the preceding claims, **characterized in that** the ducts (18) pass through at least one rib (12) which protrudes from a face (14) of a module (1) and is suitable to be arranged in a seat (13) formed around a face (15) of an adjacent module (1).

5. Extrusion die according to one of the preceding claims, **characterized in that** a manifold (2) is arranged outside of at least one module (1) to connect the filter (3), through the ducts (18), with fluid suction/compression means.

6. Extrusion die according to the previous claim, **characterized in that** the manifold (2) has an annular shape, in which the inner surface comprises at least one groove (23) which is arranged around the filter (3), in particular around the ducts (18), and is connected to at least one fitting (24) for said suction/compression means.

7. Extrusion die according to one of the preceding claims, **characterized in that** the modules (1) comprise first axial holes (16) and/or second axial holes (17).

8. Extrusion die according to the previous claim, **characterized in that** the modules (1) are aligned with each other so that the first axial holes (16) of a module (1) are aligned with the second axial holes (17) of at least one adjacent module (1), wherein screws (4) are inserted into the first axial holes (16) and screwed into the second axial holes (17) of the adjacent module (1) to join these two modules (1) to each other.

9. Extrusion die according to one of the preceding claims, **characterized in that** the channel (11) of a module (1) has a substantially tubular shape which extends along a longitudinal axis (L) and comprises, between an inlet mouth (11a) and an outlet mouth (11b), in sequence, a compression portion (11c), a central portion (11d) and an expansion portion (11e) connected to each other, wherein the area of the section of the central portion (11d) of the channel (11) is smaller than the area of the inlet mouth (11a) and the area of the outlet mouth (11b).

10. Extrusion die according to the previous claim, **characterized in that** the central portion (11d) of the channel (11) has a substantially constant section along a central section of the channel (11) and/or a substantially bilobed or elliptical profile.

11. Extrusion die according to one of the preceding claims, **characterized in that** the filter (3) comprises a plate having a central opening (31) and radial grooves (37) which are formed in one or both faces (35, 36) of the plate and connect the inner edge (33) to the outer edge (34) of the plate.

12. Extrusion die according to the previous claim, **characterized in that** one or both faces (35, 36) of the plate comprise one or more annular grooves (38) which connect two or more radial grooves (37) to each other, so that the radial grooves (37) and the annular grooves (38) form a network of grooves.
